# FASCICULE DE BREVET EUROPEEN

(11) **EP 2 607 188 B1**
(45) Date de publication et mention de la délivrance du brevet: **28.11.2018**
(21) Numéro de dépôt: 12196599.0
(22) Date de dépôt: 11.12.2012
(51) Int. Cl.: B60S 1/48

(54) **Dispositif de transport et de chauffage d'un liquide pour un systeme d'essuyage d'une vitre d'un vehicule**
Transport- und Erwärmungsvorrichtung für eine Flüssigkeit eines Scheibenwaschsystem eines Fahrzeugs
Device for conveying and heating a liquid for a system for wiping a window of a vehicle

(30) Priorité: 19.12.2011 FR 1161875
(43) Date de publication de la demande: 26.06.2013
(73) Titulaire: Valeo Systèmes d'Essuyage, 78322 Le Mesnil Saint Denis (FR)
(72) Inventeur: JARASSON, Jean-Michel, 78321 LE MESNIL SAINT DENIS (FR)
(74) Mandataire: Callu-Danseux, Violaine

(56) Documents cités:
- WO-A1-2010/034445
- DE-A1- 4 402 372
- DE-U1- 9 116 824

## Description

Le secteur technique de la présente invention est celui des systèmes d'approvisionnement et/ou de distribution en liquide lave glace pour véhicule automobile. Un tel système accompagne une installation d'essuyage des vitres du véhicule. Plus particulièrement, l'invention vise un dispositif de transport et de chauffage du liquide véhiculé entre un réservoir et un système de projection.

Les automobiles sont couramment équipées d'installation d'essuyage et de système de lavage pour assurer un essuyage et un lavage du pare-brise, et ainsi éviter que la vision qu'a le conducteur de son environnement soit perturbée. Ces installations d'essuyage comprennent des bras effectuant un mouvement de va-et-vient angulaire au bout desquels sont installés des balais allongés, porteurs eux-mêmes de lames racleuses réalisées en une matière élastique. Ces lames frottent contre le pare-brise et évacuent l'eau en l'amenant en dehors du champ de vision du conducteur. Le balai est rattaché au bras tournant de l'essuie-glace par un ensemble constitué d'un connecteur mécanique et d'un adaptateur. Le connecteur est une pièce qui est fixée directement sur la structure du balai, l'adaptateur étant une pièce intermédiaire qui permet la fixation du connecteur, et par conséquent du balai, sur le bras de l'essuie-glace. Ces deux pièces sont reliées l'une à l'autre par un axe transversal qui autorise leur rotation relative.

Les systèmes de lavage comprennent un dispositif d'amenée d'un liquide lave-vitre qui est acheminé depuis un réservoir situé dans le véhicule et qui est projeté en direction du pare-brise par des gicleurs situés généralement sur le capot, sur la grille de baie de pare-brise ou sur l'essuie-glace lui-même pour une meilleure distribution du liquide. Dans le cas de buses placées sur les balais, le liquide lave-vitre est acheminé, avant d'être réparti entre elles, par des canalisations qui sont fixées sur les bras de l'essuie-glace et qui sont raccordées à un système de distribution du balai au niveau du connecteur. Le connecteur comporte ainsi des orifices aptes à recevoir, par une liaison étanche, les embouts desdites canalisations.

Lorsque la température du liquide lave-glace est trop basse, par exemple en-dessous de 5°C, on chauffe le liquide lave-glace pour le dégivrer ou le maintenir dégivré. Pour cela, une conduite de transport réchauffe le liquide lave-glace prélevé dans un réservoir par une pompe au moment où l'on actionne la commande du lave-glace, généralement par le levier de commande placé à côté du volant et contrôlant entre autre l'actionnement des essuie-glaces.

Le chauffage du liquide au niveau de la conduite de transport est assuré par un élément chauffant qui chemine au voisinage de la conduite. Il a également été proposé d'intégrer cet élément chauffant à l'intérieur de la conduite mais une telle intégration pose des problèmes de positionnement de l'élément chauffant par rapport au conduit dans lequel circule le liquide, ce qui se traduit par une dégradation de la fonction de chauffage du liquide et une diminution de sa performance sur la longueur de l'élément chauffant. En outre, la disposition de l'élément chauffant n'est pas gérée de manière satisfaisante puisque il a été détecté des surchauffes en certaines zones de l'élément chauffant. On comprend de ce qui précède que le dispositif de transport et de chauffage de liquide tel que décrit ci-dessus présente des inconvénients.

Le document DE 44 02 372 A montre un dispositif de transport et de chauffage comme décrit dans le préambule de la première revendication.

Le but de la présente invention est donc de résoudre les inconvénients décrits ci-dessus principalement en fournissant un dispositif de transport et de chauffage d'un liquide, constitutif d'un système d'approvisionnement et/ou de distribution en liquide lave-glace, capable de répartir efficacement les calories générées par des éléments chauffants en écartant ceux-ci pour que la répartition intervienne tout autour de chaque élément chauffant.

L'invention a donc pour objet un dispositif de transport et de chauffage d'un liquide destiné à être installé entre un moyen de mise en circulation du liquide et un balai d'essuyage constitutif d'un système d'essuyage d'une vitre de véhicule, comprenant une paroi délimitant au moins un conduit de circulation du liquide et dans laquelle est noyé un élément chauffant comprenant au moins un premier brin électriquement conducteur et un deuxième brin électriquement conducteur, ledit dispositif comprenant un moyen d'espacement commun au premier brin et au deuxième brin, en contact avec le premier brin et le deuxième brin, et qui s'étend au moins entre lesdits brins.

Selon une première caractéristique de l'invention, le moyen d'espacement définit une distance déterminée entre les brins en vue de favoriser une dissipation de calories générées par les brins.

Selon une variante de l'invention, le dispositif comprend un premier conduit séparé d'un deuxième conduit par la paroi, l'élément chauffant s'étendant entre le premier conduit et le deuxième conduit. Cette zone située entre les conduits s'entend comme l'espace compris entre un premier axe qui tangente le premier conduit et le deuxième conduit et un deuxième axe qui tangente le premier conduit et le deuxième conduit en des points diamétralement opposés aux points de tangence du premier axe, le premier axe et le deuxième axe étant parallèles à une droite qui passe par un centre du premier et du deuxième conduit.

Selon une autre caractéristique de l'invention, le premier conduit et le deuxième conduit présentent chacun un centre de conduit par lesquels passe une première droite, le premier brin et le deuxième brin présentent chacun un centre de brin par lesquels passe une deuxième droite, la deuxième droite étant perpendiculaire à la première droite. On comprend ainsi que la première droite et la deuxième droite forment une croix. Une telle conception permet de réduire une largeur du dispositif de transport et de chauffage, cette largeur correspondant à une direction parallèle à la première droite.

Selon une autre variante de l'invention, le premier conduit et le deuxième conduit présentent chacun un centre de conduit par lesquels passe une première droite, le premier brin et le deuxième brin présentent chacun un centre de brin par lesquels passe une deuxième droite, la deuxième droite étant parallèle à la première droite. Une telle solution permet de former un couple premier conduit-premier brin qui peut être séparé d'un second couple deuxième conduit-deuxième brin.

Dans une telle variante, la deuxième droite peut être confondue avec la première droite. Ainsi, le premier conduit, le premier brin, le deuxième brin et le deuxième conduit sont alignés sur un même axe.

On notera qu'une face interne d'un conduit comprend une première portion de forme différente d'une deuxième portion de ladite face interne, la première portion étant agencée pour maximiser un transfert de calories entre l'élément chauffant et le liquide apte à circuler dans le conduit. En d'autres termes, la forme du conduit, vue en coupe, est organisée par rapport aux brins de sorte à minimiser la distance qui sépare ces brins des premier et deuxième conduits.

Dans une telle variante de l'invention, la première portion est rectiligne alors que la deuxième portion est courbe. La section de la face interne du conduit forme ainsi un « D », où la portion droite est placée directement en regard de l'élément chauffant.

La première portion rectiligne s'étend selon une troisième droite parallèle à une deuxième droite passant par un centre du premier brin et un centre du deuxième brin.

Selon une autre variante de l'invention, la première portion est courbée de manière convexe alors que la deuxième portion est courbée de manière concave. Ainsi, la première portion suit le contour circulaire d'un brin, ce qui permet au fluide d'échanger sur un secteur angulaire au moins égal à 60°, le secteur ayant pour origine le centre du brin concerné.

Avantageusement, la paroi du conduit qui s'étend entre un brin et la première portion de la face interne présente une épaisseur constante. On homogénéise le transfert des calories vers le liquide sur un secteur angulaire significatif du brin.

Avantageusement encore, le dispositif comprend au moins deux conduits et au moins deux éléments chauffants constitués chacun de deux brins espacés l'un de l'autre par le moyen d'espacement, dans lequel est prévu une zone sécable de la paroi disposée entre les deux éléments chauffants. Une telle zone sécable est une zone agencée pour faciliter une séparation d'un premier couple constitué d'un premier conduit et d'un premier élément chauffant d'avec un deuxième couple constitué d'un deuxième conduit et d'un deuxième élément chauffant.

La zone sécable est formée par une portion amincie de la paroi, localisée entre les deux éléments chauffants.

De préférence, le moyen d'espacement est en contact avec le premier brin et le deuxième brin, ce qui évite tout glissement des brins contre le moyen d'espacement et donc tout endommagement desdits brins.

Un tout premier avantage selon l'invention réside dans l'amélioration de l'efficacité de la fonction chauffage d'un système d'approvisionnement en liquide lave-glace.

Un autre avantage réside dans la possibilité de réduire la consommation électrique nécessaire au fonctionnement de cette fonction de chauffage.

D'autres caractéristiques, détails et avantages de l'invention ressortiront plus clairement à la lecture de la description donnée ci-après à titre indicatif en relation avec des dessins dans lesquels :
- la figure 1 est une vue générale d'un système d'approvisionnement et/ou de distribution en liquide et d'une 'installation d'essuyage, comprenant au moins un dispositif de transport et de chauffage du liquide selon l'invention,
- la figure 2 est une vue en coupe du dispositif de transport et de chauffage selon l'invention,
- la figure 3 est une vue en coupe d'une première variante du dispositif de transport et de chauffage selon l'invention,
- la figure 4 est une vue en coupe d'une deuxième variante du dispositif de transport et de chauffage selon l'invention,
- la figure 5 est une vue en coupe d'une troisième variante du dispositif de transport et de chauffage selon l'invention.

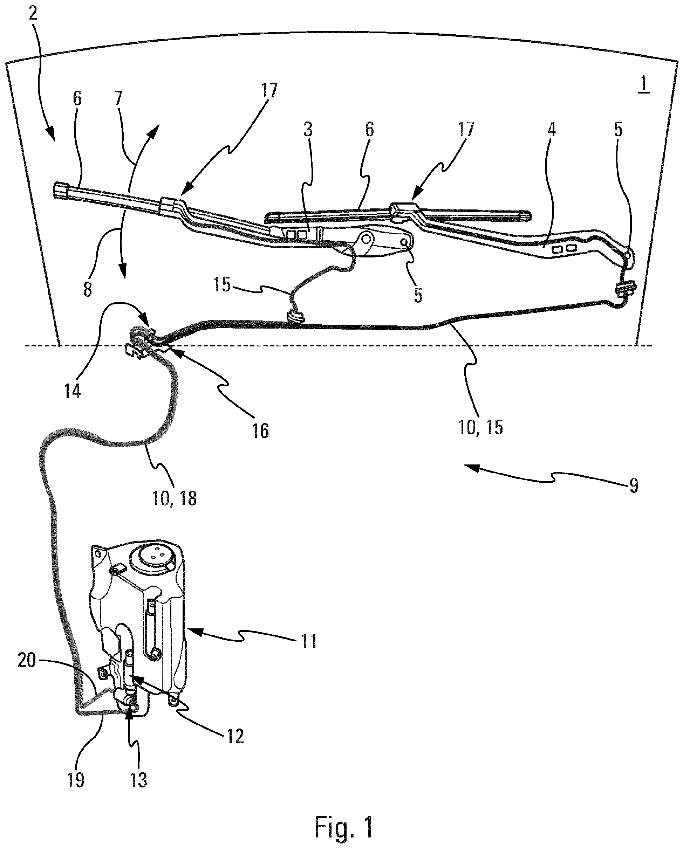

La figure 1 est une vue illustrant un pare-brise 1 de véhicule automobile destiné à être essuyé par une installation d'essuyage 2. Cette dernière comprend un premier bras 3 et un deuxième bras 4 chacun relié, par exemple, à un axe de rotation 5. Ces deux bras se déplacent sur le pare-brise 1 selon un mouvement combiné de va-et-vient ou selon un mouvement antagoniste de va-et-vient.

A l'extrémité opposée à l'axe 5 par rapport au premier bras 3 et au deuxième bras 4, on trouve un balai d'essuyage 6 dont la fonction est de racler le pare-brise pour repousser l'eau présente sur ce dernier en des zones du pare-brise qui ne gênent pas la visibilité. Ces balais d'essuyage 6 sont reliés à chaque bras par un connecteur amovible autorisant un remplacement du balai d'essuyage quand celui-ci est usé.

Les balais d'essuyage comprennent, par exemple, chacun deux rampes de projection d'un liquide, notamment un liquide lave-glace. Ces rampes s'étendent longitudinalement dans un même axe qu'un axe longitudinal du balai d'essuyage 6. Ces rampes sont disposées de part et d'autre du balai d'essuyage, selon son axe longitudinal, de manière à projeter le liquide lave-glace en avant du balai quand celui-ci se déplace selon un premier sens de déplacement illustré par la flèche 7 ou selon un deuxième sens de déplacement illustré par la flèche 8.

Cette figure 1 montre aussi la présence d'un système d'approvisionnement et/ou de distribution 9 en liquide lave-glace équipant le véhicule. Pour que les rampes projettent ce liquide, il est nécessaire de disposer d'un stock de liquide lave-glace, d'un moyen pour transporter ce liquide entre le stock et les rampes et d'un moyen de mettre en circulation ce liquide depuis ce stock vers les rampes.

Ce système d'approvisionnement et/ou de distribution 9 comprend, notamment :
- un réservoir 11 de rétention du liquide,
- un moyen de mise en circulation 12 du liquide dans le système d'approvisionnement et/ou de distribution, ce moyen peut notamment être une pompe,
- au moins un raccord hydraulique 13 destiné à relier la pompe à un dispositif de transport et de chauffage du liquide 10,
- un dispositif de raccordement 14 installé entre le dispositif de transport et de chauffage du liquide 10 relié à la pompe et un autre dispositif de transport et de chauffage du liquide 10 relié au balai d'essuyage 6,
- un support 16 apte à rassembler mécaniquement le dispositif de raccordement 14 et un ou plusieurs connecteurs électriques qui alimentent électriquement les éléments chauffants noyés à l'intérieur des dispositifs de transport et de chauffage du liquide 10 mentionnés ci-dessus et des éléments chauffants intégrés au balai d'essuyage,
- un connecteur hydraulique 17 installé entre au moins le dispositif de transport et de chauffage du liquide 10 et le balai d'essuyage 6.

Le dispositif de transport et de chauffage du liquide 10 situé entre le dispositif de raccordement 14 et le balai d'essuyage 6 sera appelé ci-après premier dispositif de transport et de chauffage du liquide 15, ce dernier étant en grande partie situé à l'extérieur du véhicule et le long d'au moins un bras d'essuyage.

Le dispositif de transport et de chauffage du liquide 10 situé entre le moyen de mise en circulation 12 et le dispositif de raccordement 14 sera quant à lui appelé deuxième dispositif de transport et de chauffage du liquide 18, ce dernier s'étendant plus particulièrement dans un compartiment du véhicule, notamment le compartiment moteur.

Pour les caractéristiques s'appliquant à l'un ou à l'autre des dispositifs de transport et de chauffage du liquide, la description emploiera le terme général dispositif de transport et de chauffage du liquide référencé 10.

L'invention couvre le cas où la structure du premier dispositif de transport et de chauffage 15 du liquide et celle du deuxième dispositif de transport et de chauffage 18 du liquide sont identiques, mais elle couvre également le cas où le premier dispositif de transport et de chauffage du liquide 15 est réalisé selon une variante de l'invention alors que le deuxième dispositif de transport et de chauffage du liquide 18 est réalisé selon une autre variante de l'invention, différente de celle mise en oeuvre pour le premier dispositif de transport et de chauffage du liquide 15.

Pour ces deux dispositifs de transport et de chauffage du liquide, il s'agit d'un tube, par exemple, flexible qui délimite au moins un conduit de circulation du liquide. Le matériau constituant un tel tube peut être, par exemple, un EPDM, un élastomère ou un caoutchouc.

Dans l'exemple de la figure 1, le premier et le deuxième dispositif de transport et de chauffage du liquide comprennent chacun deux conduits 19 et 20 à l'intérieur desquels le liquide est apte à circuler. Ce dispositif de transport et de chauffage du liquide 10 comprend encore un élément chauffant (non visible sur la figure 1) qui chemine le long des conduits en étant noyé dans la matière constitutive du dispositif de transport et de chauffage du liquide. Un tel élément chauffant est un élément résistif, qui prend la forme d'un premier brin électriquement conducteur et d'un deuxième brin électriquement conducteur qui, lorsqu'ils sont parcourus par un courant électrique, dégage des calories.

On comprend donc que cet élément chauffant forme une source de chaleur à partir de laquelle le dispositif de transport et de chauffage du liquide 10 puise l'énergie et la dissipe tout autour de l'espace, c'est-à-dire dans les conduits, aptes à contenir le liquide.

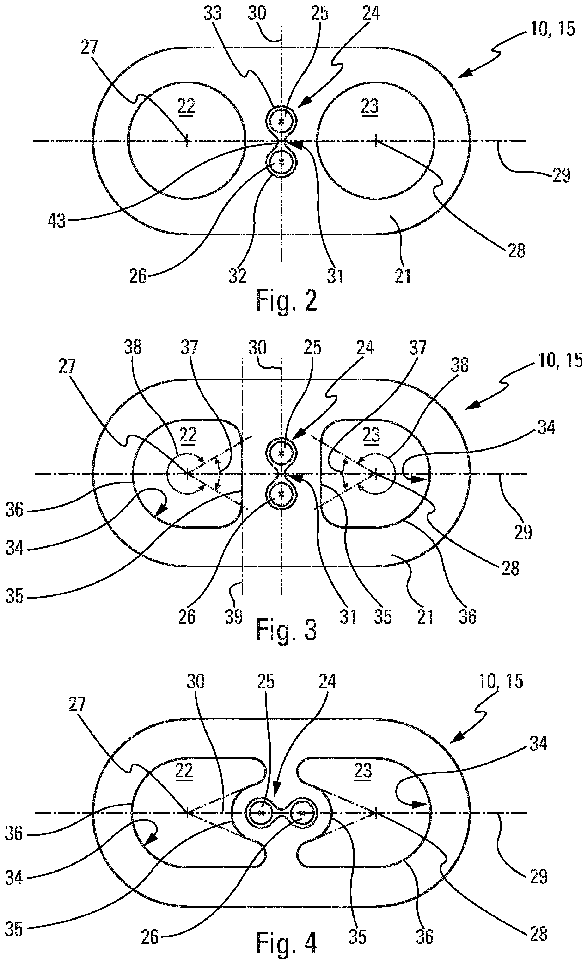

La figure 2 montre le détail du dispositif de transport et de chauffage du liquide 10. Celui-ci comprend une paroi 21 qui délimite un premier conduit 22 d'un deuxième conduit 23. Cette paroi 21 délimite également ce premier conduit 22 et ce deuxième conduit 23 par rapport au milieu environnant le dispositif de transport et de chauffage du liquide 10. Autrement dit, les conduits sont ménagés dans la paroi de manière étanche pour transporter le liquide lave-glace.

Selon l'exemple de la figure 2, on notera que la section du premier conduit 22 et du deuxième conduit 23 est circulaire, le diamètre interne de ces conduits étant, par exemple, compris entre 3 mm et 5 mm, une valeur de 3.5 mm ou de 3.9 mm étant particulièrement appropriée pour respecter les contraintes d'encombrements qu'un système d'essuyage automobile impose. Les valeurs dimensionnelles données ci-dessus sont bien entendues transposables à l'une quelconque des variantes décrites dans la présente description.

L'élément chauffant 24 comprend un premier brin 25 électriquement conducteur qui jouxte un deuxième brin 26 électriquement conducteur. Il s'agit par exemple d'un câble en cuivre ou en alliage d'aluminium dimensionné pour dégager des calories quand il est parcouru par un courant de tension comprise entre 9 et 16 volts et d'intensité comprise entre 1,5 et 10 ampères. Ce câble peut avantageusement être recouvert d'un fourreau dédié à chaque brin, ce fourreau étant distinct du moyen d'espacement tel que détaillé ci-dessous.

L'élément chauffant 24 comprend deux brins 25 et 26 qui sont en contact l'un avec l'autre à l'une ou l'autre des extrémités du dispositif de transport et de chauffage du liquide, notamment en formant une boucle. En d'autres termes, le premier brin 25 et le deuxième brin 26 forment un seul et même fil électrique que l'on a doublé à l'intérieur du dispositif de transport et de chauffage du liquide 10.

Cet élément chauffant 24 est noyé dans la paroi 21. On entend par noyé, par exemple, le fait que le matériau constitutif de la paroi 21 entoure en totalité l'élément chauffant 24, l'intégralité de la périphérie de ce dernier étant en contact avec la paroi.

La localisation de cet élément chauffant 24 par rapport au premier et au deuxième conduits 22, 23 est particulière. Cet élément chauffant 24 est disposé d'une manière générale entre le premier conduit 22 et le deuxième conduit 23, c'est-à-dire entre un premier axe passant par un centre 27 du premier conduit 22 et un deuxième axe passant par un centre 28 du deuxième conduit 23.

Selon une variante, une première droite 29 passant par le centre 27 du premier conduit 22 et par le centre 28 du deuxième conduit 23 est perpendiculaire à une deuxième droite 30 passant par un centre du premier brin 25 et par un centre du deuxième brin 26. On garantit ainsi que l'encombrement mesuré selon la première droite 29 est optimisé. Bien que la disposition perpendiculaire présente un avantage quant à l'équilibre de la répartition des calories entre le premier conduit et le deuxième conduit, l'invention couvre également le cas où la deuxième droite 30 forme un angle compris entre 0 et 90° par rapport à la première droite 29.

Le dispositif de transport et de chauffage du liquide 10 comprend encore un moyen d'espacement 31. Celui-ci est commun au premier brin 25 et au deuxième brin 26 en ce sens qu'il est disposé entre ces deux brins et en contact avec ceux-ci. Une telle définition s'entend aussi d'un moyen d'espacement qui entoure toute la périphérie de chaque brin, formant ainsi une gaine tout autour des brins, ou tout autour des fourreaux protégeant les brins quand ceux-ci en sont munis. Dans un tel cas, les parties distales 32 et 33 du moyen d'espacement 31 qui entourent les brins 25 et 26 et la partie centrale 43 du moyen d'espacement 31 forme une seule et unique pièce.

Ce moyen d'espacement 31 s'étend entre les brins. Il est ainsi installé entre le centre du premier brin 25 et le centre du deuxième brin 26, et aligné sur la deuxième droite 30. Ce moyen d'espacement 31 génère un écartement, autrement appelé distance, entre le premier brin 25 et le deuxième brin 26, ce qui permet à chacun des brins de dissiper des calories sur un secteur angulaire important. On évite également tout point chaud puisque le moyen d'espacement 31 impose une distance déterminée de manière à minimiser l'élévation de température dans l'axe de la deuxième droite 30 tout en maximisant la dissipation des calories au profit du premier conduit 22 et/ou du deuxième conduit 23.

Selon un exemple de réalisation, le moyen d'espacement est réalisé en un matériau souple, un silicone ou un polytétrafluoroéthylène (PTFE) convenant particulièrement bien à cette application en raison de leur faible adhérence utile pendant le procédé d'extrusion du dispositif de transport et de chauffage du liquide 10.

La figure 3 montre une première variante de l'invention. On s'attachera ci-dessous à décrire la différence technique avec le dispositif de transport et de chauffage du liquide selon la figure 2, et on se reportera à cette dernière pour connaître la mise en oeuvre des éléments identiques.

La différence repose dans le profil du premier conduit 22 et du deuxième conduit 23. Une face interne 34 de l'un et/ou l'autre des conduits comprend une première portion 35 de forme différente d'une deuxième portion 36 de ladite face interne. La première portion 35 s'étend ainsi sur un secteur angulaire 37 compris entre 45° et 90°, un tel secteur ayant pour origine le centre 27 ou 28 du conduit concerné. La deuxième portion 36 s'étend sur un secteur angulaire 38 complémentaire du premier secteur angulaire 37.

Il importe que la première portion 35 soit agencée pour maximiser un transfert de calories entre l'élément chauffant 24 et le liquide qui est apte à circuler dans le premier conduit 22 et/ou dans le deuxième conduit 23. Une telle maximisation est obtenue en réduisant l'épaisseur de la paroi 21 située entre l'élément chauffant et le conduit considéré.

Comme le moyen d'espacement tend à augmenter la hauteur de l'élément chauffant 24, mesurée selon la deuxième droite 30, le profil du conduit est adapté pour que la première portion 35 soit en regard de l'élément chauffant 24 sur une hauteur au moins égale à la hauteur de l'élément chauffant, l'épaisseur de la paroi 21 étant constante sur une hauteur au moins supérieure au diamètre d'un brin de l'élément chauffant. Cette épaisseur de paroi 21 s'apprécie par la distance qui sépare la paroi interne au niveau de la première portion 35 avec un segment de droite qui tangente le premier brin 25 et le deuxième brin 26, d'un même côté.

Selon un exemple de réalisation, la section de ces conduits forme d'une manière générale un « D ». En d'autres termes, la première portion 35 est rectiligne alors que la deuxième portion 36 est courbe, et comprend notamment une suite de courbes de rayons différents. Dans un tel cas, la première portion 35 rectiligne s'étend selon une troisième droite 39 parallèle à la deuxième droite 30 qui passe par le centre du premier brin 25 et le centre du deuxième brin 26.

Bien entendu, la première portion 35 est adjacente à l'élément chauffant, celle-ci étant ainsi intercalée entre la deuxième portion 36 et l'élément chauffant selon la première droite 29.

La figure 4 montre une deuxième variante de l'invention. On s'attachera ci-dessous à décrire les différences techniques avec le dispositif de transport et de chauffage du liquide selon les figures 2 ou 3, et on se reportera à ces dernières pour connaître la mise en oeuvre des éléments identiques.

Les différences reposent, d'une part dans la forme de la section du premier conduit 22 et/ou du deuxième conduit 23, et d'autre part, dans l'orientation de l'élément chauffant 24 par rapport aux premier et deuxième conduits 22 et 23.

Comme pour les variantes précédentes, le premier conduit 22 et le deuxième conduit 23 présentent chacun un centre de conduit, respectivement référencé 27 et 28, par lesquels passe la première droite 29. En revanche, l'élément chauffant 24 est disposé de manière à ce que la deuxième droite 30 qui passe par le centre du premier brin 25 et par le centre du deuxième brin 26 soit parallèle à la première droite.

Dans l'exemple de la figure 4, la deuxième droite 30 est confondue avec la première droite 29 mais l'invention couvre également le cas où l'élément chauffant est décalé latéralement, si bien qu'une distance non-nul sépare la première droite 29 de la deuxième droite 30.

En ce qui concerne la forme des conduits, on notera que la première portion 35 des conduits 22 ou 23 suit le profil courbé du brin 25 ou 26 concerné. Cette premier portion 35 présente alors une section courbe qui, vu du centre 27 du premier conduit 22 ou du centre 28 du deuxième conduit, présente une surface convexe. Vu du même point, la deuxième portion 36 suit un profil concave. Elle est notamment formée par une combinaison de parties courbes et de parties rectilignes de manière à former le volume emprunté par le liquide quand celui-ci circule dans le premier conduit 22 et dans le deuxième conduit 23.

Dans la configuration évoquée ci-dessus, il est avantageux que la paroi 21 du conduit qui s'étend entre un brin 25 ou 26, et plus particulièrement le moyen d'espacement 31, et la première portion 35 formant une partie de la face interne 34, présente une épaisseur constante. On diminue ainsi la distance qui sépare le brin du liquide qui circule dans le conduit, ce qui permet d'assurer son chauffage de manière plus efficace.

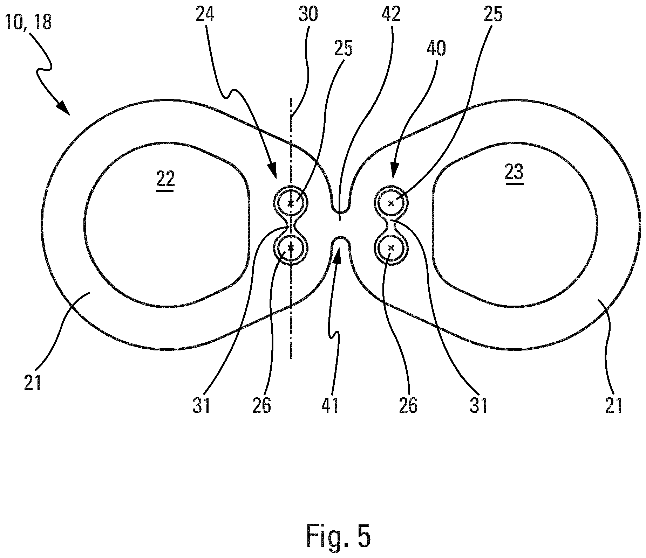

Bien qu'applicables aux variantes des figures 2 à 4, la variante de la figure 5 s'adresse plus particulièrement au deuxième dispositif de transport et de chauffage référencé 18 sur la figure 1, car celui-ci est raccordé à un moyen de mise en circulation du liquide, notamment une pompe.

Une telle pompe présente deux sorties disposées de part et d'autre d'un corps de la pompe. Ces sorties sont éloignées l'une de l'autre et ne permettent pas de raccorder directement un dispositif de transport et de chauffage tel que décrit ci-dessus. Il est ainsi nécessaire de séparer le premier conduit 22 du deuxième conduit 23 sur une distance déterminé du dispositif de transport et de chauffage, de manière à raccorder chacun de ces conduits à une sortie de la pompe. Les conduits 22, 23 utilisés selon cette variante peuvent être de section circulaire comme représentée à la figure 2 ou de section optimisée telle que montrée aux figures 3 ou 4.

Un tel dispositif comprend encore au moins un premier élément chauffant 24 et un deuxième élément chauffant 40, distinct du premier élément chauffant mais de structure similaire. Chacun de ces éléments chauffants comprend un premier brin 25 et un deuxième brin 26 espacés l'un de l'autre par le moyen d'espacement 31.

Le dispositif de transport et de chauffage 18 selon cette troisième variante comprend une zone sécable 41 de la paroi 21 qui s'étend entre le premier élément chauffant 24 et le deuxième élément chauffant 40. En pratique, une telle zone sécable est mise en oeuvre par une portion amincie 42 de la paroi 21, cette portion amincie présentant une épaisseur mesurée selon une direction parallèle à la deuxième droite 30 comprise entre 1 et 4 mm.

Cette zone sécable 41 peut être formée sur toute la longueur du dispositif de transport et de chauffage 18 mais il sera avantageux de la former uniquement aux extrémités de celle-ci. Il est alors possible de scinder en deux parties le dispositif de transport et de chauffage 18 en un premier couple formé par la paroi 21 entourant le premier conduit 22 et le premier élément chauffant 24 et en un deuxième couple formé par la paroi 21 entourant le deuxième conduit 23 et le deuxième élément chauffant 40.

Une zone sécable telle que définie ci-dessus est bien entendu également applicable à l'une quelconque des variantes illustrées et détaillées en rapport avec les figures 2 à 4.

## Revendications

1. Dispositif de transport et de chauffage (10, 15, 18) d'un liquide destiné à être installé entre un moyen de mise en circulation (12) du liquide et un balai d'essuyage (6) constitutif d'un système d'essuyage (2) d'une vitre de véhicule, comprenant une paroi (21) délimitant au moins un conduit (22, 23) de circulation du liquide et dans laquelle est noyé un élément chauffant (24, 40) comprenant au moins un premier brin (25) électriquement conducteur et un deuxième brin (26) électriquement conducteur, dans lequel est prévu un moyen d'espacement (31) commun au premier brin (25) et au deuxième brin (26), **caractérisé en ce que** le moyen d'espacement est en contact avec le premier brin (25) et le deuxième brin (26), et **en ce qu'**il s'étend au moins entre lesdits brins (25, 26).

2. Dispositif selon la revendication 1, dans lequel le moyen d'espacement (31) définit une distance déterminée entre les brins (25, 26) en vue de favoriser une dissipation de calories générées par les brins (25, 26).

3. Dispositif selon l'une des revendications 1 ou 2, dans lequel est prévu un premier conduit (22) séparé d'un deuxième conduit (23) par la paroi (21), l'élément chauffant (24) s'étendant entre le premier conduit (22) et le deuxième conduit (23).

4. Dispositif selon la revendication 3, dans lequel le premier conduit (22) et le deuxième conduit (23) présentent chacun un centre de conduit (27, 28) par lesquels passe une première droite (29), le premier brin (25) et le deuxième brin (26) présentent chacun un centre de brin par lesquels passe une deuxième droite (30), la deuxième droite (30) étant perpendiculaire à la première droite (29).

5. Dispositif selon la revendication 3, dans lequel le premier conduit (22) et le deuxième conduit (23) présentent chacun un centre de conduit (27, 28) par lesquels passe une première droite (29), le premier brin (25) et le deuxième brin (26) présentent chacun un centre de brin par lesquels passe une deuxième droite (30), la deuxième droite (30) étant parallèle à la première droite (29).

6. Dispositif selon la revendication 5, dans lequel la deuxième droite (30) est confondue avec la première droite (29).

7. Dispositif selon l'une quelconque des revendications précédentes, dans lequel une face interne (34) d'un conduit (22, 23) comprend une première portion (35) de forme différente d'une deuxième portion (36) de ladite face interne (34), la première portion (35) étant agencée pour maximiser un transfert de calories entre l'élément chauffant (24) et le liquide apte à circuler dans le conduit (22, 23).

8. Dispositif selon la revendication 7, dans lequel la première portion (35) est rectiligne alors que la deuxième portion (36) est courbe.

9. Dispositif selon la revendication 8, dans lequel la première portion (35) rectiligne s'étend selon une troisième droite (39) parallèle à une deuxième droite (30) passant par un centre du premier brin (25) et un centre du deuxième brin (26).

10. Dispositif selon la revendication 7, dans lequel la première portion (35) est courbée de manière convexe alors que la deuxième portion (36) est courbée de manière concave.

11. Dispositif selon l'une quelconque des revendications 7 à 10, dans lequel la paroi (21) du conduit (22, 23) qui s'étend entre un brin (25, 26) et la première portion (35) de la face interne (34) présente une épaisseur constante.

12. Dispositif selon l'une quelconque des revendications précédentes, comprenant au moins deux conduits (22, 23) et au moins deux éléments chauffants (24, 40) constitués chacun de deux brins (25, 26) espacés l'un de l'autre par le moyen d'espacement (31), dans lequel est prévu une zone sécable (41) de la paroi (21) disposée entre les deux éléments chauffants (24, 40).

13. Dispositif selon la revendication 12, dans lequel la zone sécable (41) est formée par une portion amincie (42) de la paroi (21).

14. Système d'approvisionnement et/ou de distribution (9) en liquide lave-glace à projeter sur une vitre d'un véhicule comprenant au moins un réservoir (11), un moyen de mise en circulation du liquide (12), un moyen de projection dudit liquide et un dispositif de transport et de chauffage (10, 15, 18) dudit liquide selon l'une quelconque des revendications précédentes.

## Patentansprüche

1. Vorrichtung (10, 15, 18) zum Transport und zur Erwärmung einer Flüssigkeit, die dazu bestimmt ist, zwischen einem Mittel (12) zum Inumlaufbringen der Flüssigkeit und einem Wischerblatt (6) installiert zu sein, das Bestandteil eines systems (2) zum Wischen einer Fahrzeugscheibe ist, umfassend eine Wand (21), die mindestens eine Leitung (22, 23) zur Zirkulation der Flüssigkeit begrenzt und in die ein Heizelement (24, 40) eingelassen ist, das mindestens eine elektrisch leitfähige erste Ader (25) und eine elektrisch leitfähige zweite Ader (26) umfasst, wobei in der Vorrichtung ein Beabstandungsmittel (31) vorgesehen ist, das der ersten Ader (25) und der zweiten Ader (26) gemein ist, **dadurch gekennzeichnet, dass** das Beabstandungsmittel in Berührung mit der ersten Ader (25) und der zweiten Ader (26) ist, und dass es sich mindestens zwischen den Adern (25, 26) erstreckt.

2. Vorrichtung nach Anspruch 1, wobei das Beabstandungsmittel (31) eine bestimmte Entfernung zwischen den Adern (25, 26) definiert, um eine Ableitung der von den Adern (25, 26) erzeugten Wärme zu begünstigen.

3. Vorrichtung nach einem der Ansprüche 1 oder 2, wobei eine erste Leitung (22) vorgesehen ist, die durch die Wand (21) von einer zweiten Leitung (23) getrennt ist, wobei sich das Heizelement (24) zwischen der ersten Leitung (22) und der zweiten Leitung (23) erstreckt.

4. Vorrichtung nach Anspruch 3, wobei die erste Leitung (22) und die zweite Leitung (23) jeweils eine Leitungsmitte (27, 28) aufweisen, durch die eine erste Gerade (29) verläuft, und die erste Ader (25) und die zweite Ader (26) jeweils eine Adernmitte aufweisen, durch die eine zweite Gerade (30) verläuft, wobei die zweite Gerade (30) senkrecht zur ersten Geraden (29) ist.

5. Vorrichtung nach Anspruch 3, wobei die erste Leitung (22) und die zweite Leitung (23) jeweils eine Leitungsmitte (27, 28) aufweisen, durch die eine erste Gerade (29) verläuft, und die erste Ader (25) und die zweite Ader (26) jeweils eine Adernmitte aufweisen, durch die eine zweite Gerade (30) verläuft, wobei die zweite Gerade (30) parallel zur ersten Geraden (29) ist.

6. Vorrichtung nach Anspruch 5, wobei die zweite Gerade (30) mit der ersten Geraden (29) zusammenfällt.

7. Vorrichtung nach einem der vorhergehenden Ansprüche, wobei eine innere Fläche (34) einer Leitung (22, 23) einen ersten Abschnitt (35) mit einer von einem zweiten Abschnitt (36) der inneren Fläche (34) verschiedenen Form umfasst, wobei der erste Abschnitt (35) dazu eingerichtet ist, eine Wärmeübertragung zwischen dem Heizelement (24) und der Flüssigkeit, die fähig ist, in der Leitung (22, 23) zu zirkulieren, zu maximieren.

8. Vorrichtung nach Anspruch 7, wobei der erste Abschnitt (35) geradlinig ist, wohingegen der zweite Abschnitt (36) gekrümmt ist.

9. Vorrichtung nach Anspruch 8, wobei der geradlinige erste Abschnitt (35) sich entlang einer dritten Geraden (39) parallel zu einer zweiten Geraden (30) erstreckt, die durch eine Mitte der ersten Ader (25) und eine Mitte der zweiten Ader (26) verläuft.

10. Vorrichtung nach Anspruch 7, wobei der erste Abschnitt (35) konvex gekrümmt ist, wohingegen der zweite Abschnitt (36) konkav gekrümmt ist.

11. Vorrichtung nach einem der Ansprüche 7 bis 10, wobei die Wand (21) der Leitung (22, 23), die sich zwischen einer Ader (25, 26) und dem ersten Abschnitt (35) der inneren Fläche (34) erstreckt, eine konstante Dicke aufweist.

12. Vorrichtung nach einem der vorhergehenden Ansprüche, umfassend mindestens zwei Leitungen (22, 23) und mindestens zwei Heizelemente (24, 40), die jeweils aus zwei Adern (25, 26) bestehen, die durch das Beabstandungsmittel (31) voneinander beabstandet sind, in der ein teilbarer Bereich (41) der Wand (21) vorgesehen ist, der zwischen den zwei Heizelementen (24, 40) angeordnet ist.

13. Vorrichtung nach Anspruch 12, wobei der teilbare Bereich (41) durch einen verschmälerten Abschnitt (42) der Wand (21) gebildet ist.

14. Zuführ- und/oder Verteilsystem (9) für eine Scheibenwaschflüssigkeit, die auf eine Scheibe eines Fahrzeugs zu spritzen ist, umfassend mindestens einen Behälter (11), ein Mittel (12) zum Inumlaufbringen der Flüssigkeit, ein Mittel zum Spritzen der Flüssigkeit und eine Vorrichtung (10, 15, 18) zum Transport und zur Erwärmung der Flüssigkeit nach einem der vorhergehenden Ansprüche.

## Claims

1. Device for transporting and heating (10, 15, 18) a liquid intended to be installed between a means for circulating (12) the liquid and a wiper brush (6) constituting a wiping system (2) of a vehicle window, comprising a wall (21) delimiting at least one liquid circulation duct (22, 23) and in which is embedded a heating element (24, 40) comprising at least one first electrically conductive strand (25) and one second electrically conductive strand (26), in which is provided a spacing means (31) common to the first strand (25) and to the second strand (26), **characterized in that** the spacing means (31) is in contact with the first strand (25) and the second strand (26), and which extends at least between said strands (25, 26).

2. Device according to Claim 1, in which the spacing means (31) defines a determined distance between the strands (25, 26) in order to promote a dissipation of calories generated by the strands (25, 26).

3. Device according to one of Claims 1 or 2, in which is provided a first duct (22) separated from a second duct (23) by the wall (21), the heating element (24) extending between the first duct (22) and the second duct (23).

4. Device according to Claim 3, in which the first duct (22) and the second duct (23) each have a duct centre (27, 28) through which passes a first straight line (29), the first strand (25) and the second strand (26) each have a strand centre through which passes a second straight line (30), the second straight line (30) being at right angles to the first straight line (29).

5. Device according to Claim 3, in which the first duct (22) and the second duct (23) each have a duct centre (27, 28) through which passes a first straight line (29), the first strand (25) and the second strand (26) each have a strand centre through which passes a second straight line (30), the second straight line (30) being parallel to the first straight line (29).

6. Device according to Claim 5, in which the second straight line (30) is merged with the first straight line (29).

7. Device according to any one of the preceding claims, in which an internal face (34) of a duct (22, 23) comprises a first portion (35) of a form different from a second portion (36) of said internal face (34), the first portion (35) being arranged to maximize a transfer of calories between the heating element (24) and the liquid which can circulate in the duct (22, 23).

8. Device according to Claim 7, in which the first portion (35) is rectilinear whereas the second portion (36) is curved.

9. Device according to Claim 8, in which the rectilinear first portion (35) extends along a third straight line (39) parallel to a second straight line (30) passing through a centre of the first strand (25) and a centre of the second strand (26).

10. Device according to Claim 7, in which the first portion (35) is curved in a convex manner whereas the second portion (36) is curved in a concave manner.

11. Device according to any one of Claims 7 to 10, in which the wall (21) of the duct (22, 23) which extends between a strand (25, 26) and the first portion (35) of the internal face (34) has a constant thickness.

12. Device according to any one of the preceding claims, comprising at least two ducts (22, 23) and at least two heating elements (24, 40) each consisting of two strands (25, 26) spaced apart from one another by the spacing means (31), in which is provided a divisible area (41) of the wall (21) arranged between the two heating elements (24, 40).

13. Device according to Claim 12, in which the divisible area (41) is formed by a thinned portion (42) of the wall (21).

14. System for supplying and/or distributing (9) screen-wash liquid to be sprayed onto a window of a vehicle comprising at least one tank (11), one liquid circulation means (12), one means for spraying said liquid and one device for transporting and heating (10, 15, 18) said liquid according to any one of the preceding claims.
